(19) Europäisches Patentamt
European Patent Office
Office européen des brevets

(11) EP 2 987 825 A1

# (12) EUROPEAN PATENT APPLICATION

(43) Date of publication:
**24.02.2016 Bulletin 2016/08**

(21) Application number: **14181769.2**

(22) Date of filing: **21.08.2014**

(51) Int Cl.:
***C08K 5/098*** *(2006.01)* ***C08K 5/1545*** *(2006.01)*
***C08K 5/526*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
- **Wang, Jingbo**
  **4040 Linz (AT)**
- **Kniesel, Claudia**
  **4020 Linz (AT)**
- **Wolfschwenger, Johannes**
  **4491 Niederneukirchen (AT)**
- **Standler, Alexander**
  **4231 Wartberg/Aist (AT)**
- **Fuchs, Andreas**
  **4060 Leonding (AT)**
- **Doshev, Petar**
  **4040 Linz (AT)**

(74) Representative: **Lux, Berthold**
**Maiwald Patentanwalts GmbH**
**Elisenhof**
**Elisenstraße 3**
**80335 München (DE)**

## (54) Low volatile polyolefin composition comprising vitamin E-type stabiliser

(57) The invention relates to polyolefin compositions having a low content of volatile components, which is achieved by the use of specific substances, in particular vitamin E-type stabilisers.

The polyolefin compositions of the invention are especially useful for automotive interior applications.

EP 2 987 825 A1

**Description**

The present invention relates to polyolefin compositions having a low content of volatile components.

Recent progresses in the manufacturing and processing of polymers have led to the application of plastics in virtually every aspect of modern day life. Polyolefin, like polyethylene and polypropylene, is the material of choice for many applications. For instance, polypropylene is increasingly used for applications in the automotive interior. However, such materials undergo radical driven degradation processes especially during processing steps which might include moulding, extrusion, etc. Accordingly, stabilisers are needed for reducing oxidation and hindering the degradations of the polyolefin materials. Alpha-tocopherol, also known as vitamin E, has been a choice of the stabilisers for these purposes.

In EP 0805178, a stabilizing system for plastic material susceptible of thermal, oxidative and/or light induced deterioration is disclosed. This system comprises a homogenous blend of alpha-tocopherol, optionally together with other additives and a polyolefin carrier.

In EP2014704, a low migration polyolefin composition comprising mixture of phenolic stabilizer and a vitamin E-type stabiliser is disclosed.

However, a further requirement of the polyolefin compositions used in automotive applications are low levels of volatiles and fogging, as well as low level of odour. Volatiles and fogging are measures of the emissions of different hydrocarbon fractions of a polymer. Odour (or rather malodour) is measured organoleptically and is a measure of the intensity of the smell of a certain polymer under standardised conditions. Standard methods for the measurement of volatiles, fogging and odour are listed in the experimental section. Over the last years the standard requirements for volatiles, fogging and odour have been ever steadily tightened. One way to reduce the volatiles, fogging and odour is using special stabilisers. EP2154190 encloses the use of specific substances, in particular certain hindered amine light stabilisers to produce polypropylene compositions having low content of volatile components.

It is therefore the object of the present invention to provide a way to produce polyolefin compositions having reduced volatile and fogging components.

The aforementioned object could be achieved with the use of a vitamin E-type stabiliser (VE) according to formula (I):

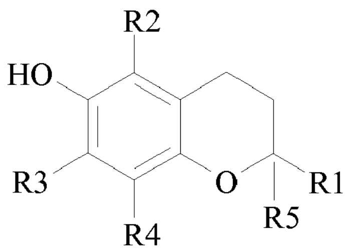

(I)

wherein R1, R2, R3, R4 and R5 independently are H, or non-substituted or substituted aliphatic or aromatic hydrocarbyl radicals which may comprise heteroatoms for producing stabilised polyolefin compositions having reduced VOC and FOG value according to VDA 278.

It was surprisingly possible to achieve low VOC and FOG values determined according to VDA 278. Also the Total Volatiles values which are achieved by using a vitamin E-type stabiliser (VE) according to formula (I) are lower than the Total Volatiles values of the polyolefin composition when it does not contain a vitamin E-type stabiliser (VE) according to formula (I). At the same time, the polyolefin composition containing the vitamin E-type stabiliser (VE) according to formula (I) has good processing stability in terms of melt flow rate (MFR).

The heteroatoms which may be present in the non-substituted or substituted aliphatic or aromatic hydrocarbyl radicals R1, R2, R3, R4 and/or R5 of the vitamin E-type stabiliser (VE) according to formula (I) may be oxygen, nitrogen, phosphorus or the like. It is, however, preferred that R1, R2, R3, R4 or R5, more preferred R1, R2, R3, R4 and R5, do not comprise heteroatoms, i.e. are non-substituted or substituted aliphatic or aromatic hydrocarbyl radicals only, or, as mentioned, H.

Furthermore, preferably R2, R3, R4 or R5, more preferably R2, R3, R4 and R5, are H, or saturated aliphatic hydrocarbyl radicals comprising from 1 to 5 carbon atoms, and still more preferably R2, R3, R4 or R5, more preferably R2, R3, R4 and R5, are H, or methyl groups.

Furthermore, preferably R5 is a methyl group, regardless of the nature of the other residues R2 to R4.

In an especially preferred embodiment, R4 and R5 are methyl groups, and R2 and R3 are H, or methyl groups.

Most preferably, R2, R3, R4 and R5 are all methyl groups.

Still further, preferably R1 is a non-substituted or substituted aliphatic or aromatic hydrocarbyl radical containing from 5 to 50 carbon atoms, more preferably R1 is a non-substituted or substituted aliphatic hydrocarbyl radical containing

from 5 to 50, more preferably from 10 to 30, carbon atoms, and most preferably R1 is a 4,8,12-trimethyltridecyl group.

In a most preferred embodiment, the vitamin E-type stabiliser (VE) according to formula (I) is alpha-tocopherol, i.e. R2, R3, R4 and R5 are methyl groups and R1 is 4,8,12-trimethyl-tridecyl.

Vitamin E-type stabiliser (VE) is preferably contained in the stabilised composition in an amount of at most 1000ppm, more preferably of at most 500 ppm, still more preferably of at most 250 ppm, even preferably of at most 150 ppm, based on the total composition.

Furthermore, vitamin E-type stabiliser (VE) is preferably contained in the stabilised composition in an amount of at least 25 ppm, more preferably of at least 50 ppm, and most preferably of at least 75 ppm, based on the total composition.

It is particularly preferred that the stabilised polyolefin composition of the present invention does not contain any phenolic stabilizers.

In a preferred embodiment, the polyolefin base resins to be stabilized are polypropylene, high density polyethylene, low density polyethylene, and linear low density polyethylene. Polypropylene is especially preferred. There is no limitation as to the types of polypropylene, which can be uses for the present invention. Accordingly, the polypropylene composition comprises polypropylene which is selected from the list consisting of propylene homopolymers, propylene copolymers, in particular propylene random copolymers and heterophasic propylene copolymers, and mixtures of propylene homopolymers and copolymers. In case of copolymers, the preferred comonomers are ethylene, $C_4$-$C_{10}$-$\alpha$-olefins and mixtures thereof.

The polyolefin base resins in accordance with the present invention may be prepared by using conventional catalysts, including Ziegler-Natta catalysts and single site catalysts (including metallocenes), which may be supported catalysts.

The polyolefin in accordance with the present invention typically has an MFR of from 0,05 to 1000 g/10min at 230 °C/2,16 kg (or at 190 °C/2,16 kg, respectively), depending on the desired end use.

According to a further embodiment of the present invention, the stabilised polyolefin composition having a stabilization ratio, in terms of MFR, of higher than 1,45 comparing to unstabilised polyolefin compositions, wherein the MFR stabilization ratio is calculated according to the equation I

$$\text{MFR stabilization ratio} = \frac{\text{MFR (unstabilized)}}{\text{MFR (stabilized)}} \qquad \text{(I)}$$

wherein,
the MFR stabilization ratio is the relative ratio of the MFR value of the unstabilized polyolefin compositions compared to stabilised polyolefin compositions;
MFR(stabilized) is the MFR value of stabilized polyolefin composition
MFR(unstabilized) is the MFR value of unstabilised polyolefin composition.

A "stabilized polyolefin composition" contains at least one additional stabilizer, of which the stabilizing effect is of interest, in comparison to an "unstabilised polyolefin composition" which does not contain this stabilizer. Of course, both the stabilized and the unstabilised polyolefin composition may contain other additives, e.g. other stabilisers. For a meaningful comparison between stabilized and unstabilised polyolefin compositions, it is necessary that the stabilized and unstabilised polyolefin composition contain the same amount and type of additives apart from the one stabilizing compound of which the stabilizing effect is of interest.

According to a preferred embodiment, a vitamin E-type stabiliser (VE) according to formula (I) is used in a stabilised polyolefin composition to achieve a low VOC and FOG value.

Accordingly, the stabilised polyolefin compositions have a VOC reduction ($\Delta$VOC%) of higher than 14%, preferably more than 18%, comparing to unstabilised polyolefin compositions, wherein the $\Delta$VOC% is calculated according to the equation II

$$\Delta\text{VOC\%} = \frac{\text{VOC(stabilized)} - \text{VOC(unstabilized)}}{\text{VOC(unstabilized)}} \times 100 \qquad \text{(II)}$$

wherein,
the $\Delta$VOC% is the relative change of the VOC value in the stabilized polyolefin compositions compared to the unstabilised polyolefin compositions (in %);
VOC(stabilized) is the VOC value of stabilized polyolefin compositions
VOC(unstabilized) is the VOC value of unstabilised polyolefin compositions.

The polyolefin compositions of the invention have a FOG reduction value ($\Delta$FOG%) of more than 11%, preferably

more than 15%, comparing to unstabilised polyolefin compositions, wherein the ΔVOC% is calculated according to the equation III

$$\Delta FOG\% = \frac{FOG(stabilized) - FOG(unstabilized)}{FOG(unstabilized)} \times 100 \qquad (III)$$

wherein,
the ΔFOG% is the relative change of the FOG value in the stabilized polyolefin compositions compared to the unstabilised polyolefin compositions (in %);
FOG(stabilized) is the FOG value of stabilized polyolefin compositions
FOG(unstabilized) is the FOG value of unstabilised polyolefin compositions.

The odour of polyolefin composition is evaluated according to VDA 270:1992. The odour evaluation shall be made for all variants as defined in VDA 270, using a grading system from 1 to 6, half steps being allowed.

Evaluation Scale:

| | |
|---|---|
| Grade 1 | not perceptible |
| Grade 2 | perceptible, not disturbing |
| Grade 3 | clearly perceptible, but not disturbing |
| Grade 4 | disturbing |
| Grade 5 | strongly disturbing |
| Grade 6 | not acceptable |

The odour characteristic is indicated as an arithmetic mean of the individual grades.

In a preferred embodiment of the present invention, the stabilised polyolefin compositions have an Odour (mean) value of not more than 3,5, preferably of not more than 3, more preferably of not more than 2,7.

The stabilized polyolefin compositions in accordance with the present invention are preferably used in automotive applications, especially in the automotive interior.

## EXAMPLES

The following definitions of terms and determination methods apply for the above general description of the invention as well as to the below examples unless otherwise defined.

### 1. Measuring Methods

#### $MFR_2$ (230 °C)

The melt flow rate (MFR) of polypropylene was measured according to ISO 1133 (230 °C, 2,16 kg load).

#### Odour

Odour was determined according to VDA 270:1992 according to variant 3 from pellets with a panel of 7 people.

#### Total Volatiles

The Total Volatiles value is determined according to VDA 277:1995 from pellets. The Total Volatiles value is the total emission of organic carbon, determined according to the method in VDA 277. This value represents the amount of organic compounds which are emitted by a test sample which compounds can be found in the interior of a car.

Total Volatiles according to VDA 277, VOC and FOG according to VDA278 are determined with different methods. When one value is known, it is not possible to draw conclusions about the other values.

#### VOC

VOC was determined according to VDA 278:2002 from pellets.

VOC according to VDA 278 is the sum of all high and medium volatile compounds. It is calculated as toluene equivalent (TE). VOC according to VDA 278 represents all organic compounds in the boiling point and elution range of up to $C_{20}$ (n-eicosane).

**FOG**

FOG was determined according to VDA 278:2002 from pellets.

FOG according to VDA 278 is the sum of all organic compounds of low volatility, which have an elution time greater than or equal to n-hexadecane. FOG is calculated as hexadecane equivalent (HD). FOG according to VDA 278 represents organic compounds in the boiling point range of n-alkanes $C_{16}$ to $C_{32}$.

VDA standards are issued by "Verband der Automobilindustrie". The VDA standards used herein are available from "Dokumentation Kraftfahrwesen (DKF); Ulrichstrasse 14, D-74321 Bietigheim-Bissingen, Germany or can be downloaded from their website (www.dkf-ev.de).

**2. Examples**

Polyolefin used as base polymer in all samples was a propylene homopolymer powder produced by a mixed liquid-gas techniques in the presence of a metallocene catalyst.

The compositions (IE1 and CE1-5) were compounded in the TSE 16 twin screw extruder with the indicated amount of stabilizers. The temperature was 170 - 190-210 - 220 - 200°C from hopper to die, and the screw speed was 250 rpm, with a throughput of 3 kg/h. In order to get homogeneous pellets, the speed of the knife on pelletizer was controlled at 200rpm for all of the sequences.

All compositions (IE1 and CE1-5) contain 0,10 wt% of Irgafos 168 (Tris (2,4-di-*t*-butylphenyl) phosphite) available from BASF and 0,05 wt% of Calcium Stearate. CE1 contains only these two additives and is therefore the "unstabilised" polyolefin composition in the sense of the present invention.

The following compounds were used as stabilizers in the preparation of the compositions:

Irganox 1010 (CAS NO. **6683-19-8**, Pentaerythrityl-tetrakis(3-(3',5'-di-tert. butyl-4-hydroxyphenyl)-propionate) is commercially available from BASF

Irganox 1076 (CAS NO. **2082-79-3**, Octadecyl 3-(3',5'-di-tert. butyl-4-hydroxyphenyl)propionate) is commercially available from BASF

Irganox 3114 (CAS No. **27676-62-6**, 1,3,5-Tris(3',5'-di-tert. butyl-4'-hydroxybenzyl)-isocyanurate) is commercially available from BASF

Chimassorb 944 (CAS NO. **71878-19-8**, Poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino))) is commercially available from BASF

Vitamin E (CAS NO. **10191-41-0**, 2,5,7,8-Tetramethyl-2(4',8',12'-trimethyltridecyl)chroman-6-ol) is available as 10% masterbatch produced by Membrana. HDPE is used as carrier.

The compositions, as well as the Odour, Total Volatiles, VOC and FOG properties are shown in detail in table 1. The specified wt.% values are in each case relative to the total amount of components specified in the table for the respective example.

**Table 1**

| | unit | C.E. 1 | I.E. 1 | C.E. 2 | C.E. 3 | C.E. 4 | C.E. 5 |
|---|---|---|---|---|---|---|---|
| homopolymer powder | wt% | 99,85 | 99,84 | 99,65 | 99,65 | 99,75 | 99,75 |
| Irgafos.168 | wt% | 0,10 | 0,10 | 0,10 | 0,10 | 0,10 | 0,10 |
| CaSt | wt% | 0,05 | 0,05 | 0,05 | 0,05 | 0,05 | 0,05 |
| VE | wt% | / | 0,01 | / | / | / | / |
| Irganox 3114 | wt% | / | / | 0,20 | / | / | / |

(continued)

| | unit | C.E. 1 | I.E. 1 | C.E. 2 | C.E. 3 | C.E. 4 | C.E. 5 |
|---|---|---|---|---|---|---|---|
| Irganox 1076 | wt% | / | / | / | 0,20 | / | / |
| Irganox 1010 | wt% | / | / | / | / | 0,10 | / |
| Chimassorb 944 | wt% | / | / | / | / | / | 0,10 |
| MFR (2.16 kg) | g/10 min | 90 | 57 | 57 | 57 | 58 | 64 |
| MFR stabilizing ratio | | 1 | 1,58 | 1,58 | 1,58 | 1,55 | 1,41 |
| Total volatiles | µg C/g | 19,5 | 16,3 | 16 | 17 | 18 | 19 |
| VOC | µg TE/g | 39 | 30 | 34 | 35 | 34 | 30 |
| ΔVOC[1] | % | | -23 | -13 | -10 | -13 | -23 |
| FOG | µg HD/g | 115 | 95 | 104 | 106 | 105 | 93 |
| ΔFOG /%[2] | % | | -17 | -10 | -8 | -9 | -19 |
| Odour/ mean | | 2,6 | 2,4 | 3,1 | 2,3 | 3,6 | 2,9 |
| Odour/ Median | | 2 | 3 | 3 | 2 | 4 | 3 |
| [1,2] "-" means reduction | | | | | | | |

## Claims

1. Use of a vitamin E-type stabiliser (VE) according to formula (I):

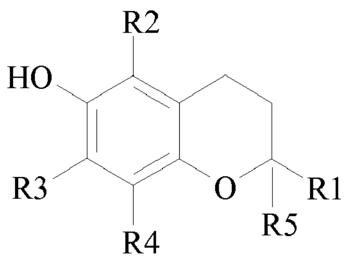

(I)

wherein R1, R2, R3, R4 and R5 independently are H, or non-substituted or substituted aliphatic or aromatic hydrocarbyl radicals which may comprise heteroatoms for producing stabilised polyolefin compositions having reduced VOC and FOG value according to VDA 278.

2. Use according to claim 1, **characterised in that** in vitamin E-type stabilizer (VE) of formula (I) R2, R3, R4 and R5 independently are H, or saturated aliphatic hydrocarbyl radicals comprising from 1 to 5 carbon atoms.

3. Use according to any one of the preceding claims, **characterised in that** in vitamin E-type stabilizer (VE) of formula (I) R1 is a non-substituted or substituted aliphatic hydrocarbyl radical containing from 5 to 50 carbon atoms.

4. Use according to any one of the preceding claims, **characterised in that** the vitamin E-type stabilizer (VE) is alpha-tocopherol.

5. Use according to any one of the preceding claims, **characterised in that** the vitamin E-type stabilizer (VE) is contained in the stabilised polyolefin composition in an amount of at most 1000 ppm

6. Use according to any one of the preceding claims, **characterised in that** the vitamin E-type stabilizer (VE) is contained in the stabilised polyolefin composition in an amount of at least 25 ppm

7. Use according to any one of the preceding claims, **characterised in that** the stabilised polyolefin composition is free of phenolic stabilizers.

8. Use according to any one of the preceding claims, **characterised in that** the base resin in the polyolefin composition comprises polypropylene homo-and/or copolymer.

9. Use according to any one of the preceding claims, **characterised in that** the stabilised polyolefin composition having a MFR stabilization ratio of higher than 1,45 comparing to unstabilised polyolefin compositions, wherein the MFR stabilization ratio is calculated according to the equation I

$$\text{MFR stabilizing ratio} = \frac{\text{MFR (unstabilized)}}{\text{MFR (stabilized)}} \quad \text{(I)}$$

wherein,
the MFR stabilization ratio is the relative ratio of the MFR value of the unstabilized polyolefin compositions compared to polyolefin compositions comprising stabilizers;
MFR(stabilized) is the MFR value of stabilized polyolefin compositions MFR(unstabilized) is the MFR value of unstabilised polyolefin compositions.

10. Use according to any one of the preceding claims, **characterised in that** the stabilised polyolefin compositions having a ΔVOC% of higher than 14% comparing to unstabilised polyolefin compositions, wherein the ΔVOC% is calculated according to the equation II

$$\Delta\text{VOC\%} = \frac{\text{VOC(stabilized)} - \text{VOC(unstabilized)}}{\text{VOC(unstabilized)}} \times 100 \quad \text{(II)}$$

wherein,
the ΔVOC% is the relative change of the VOC value in the stabilized polyolefin compositions compared to unstabilised polyolefin compositions (in %); VOC(stabilized) is the VOC value of stabilized polyolefin compositions VOC(unstabilized) is the VOC value of unstabilised polyolefin compositions.

11. Use according to any one of the preceding claims, **characterised in that** the stabilised polyolefin compositions having a ΔFOG% of higher than 11% comparing to unstabilised polyolefin compositions , wherein the ΔFOG% is calculated according to the equation III

$$\Delta\text{FOG\%} = \frac{\text{FOG(stabilized)} - \text{FOG(unstabilized)}}{\text{FOG(unstabilized)}} \times 100 \quad \text{(III)}$$

wherein,
the ΔFOG% is the relative change of the FOG value in the stabilized polyolefin compositions compared to unstabilised polyolefin compositions (in %); FOG(stabilized) is the FOG value of stabilized polyolefin compositions FOG(unstabilized) is the FOG value of unstabilised polyolefin compositions.

12. Use according to any one of the preceding claims, **characterised in that** the stabilised polyolefin compositions having an odour (mean) value of not more than 3,5.

Europäisches Patentamt
European Patent Office
Office européen des brevets

# EUROPEAN SEARCH REPORT

Application Number
EP 14 18 1769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 666 283 A1 (DSM NV [NL]) 9 August 1995 (1995-08-09) * page 1, lines 15-33; examples * ----- | 1-12 | INV. C08K5/098 C08K5/1545 C08K5/526 |
| Y,D | EP 0 805 178 A1 (CIBA GEIGY AG [CH]) 5 November 1997 (1997-11-05) * page 1, lines 3-10 * * page 3, lines 31-56; claims; examples * ----- | 1-12 | |
| X | WO 01/62837 A2 (ALCOA INC [US]; GAIKWAD SANJEEV M [US]; LELAND MARK E [US]; DOUN STEPH) 30 August 2001 (2001-08-30) | 1-4,6,7 | |
| A | * page 1, lines 3-7 * * page 2, lines 11-13, 25-30 * * page 3, lines 18-19 * * page 6, lines 27-30; claims 5, 6, 10 * ----- | 5,8-12 | |
| Y | EP 2 154 190 A1 (BOREALIS AG [AT]) 17 February 2010 (2010-02-17) * paragraphs [0001], [0010], [0043], [0047]; examples * ----- | 1-12 | |
| | | | TECHNICAL FIELDS SEARCHED (IPC) |
| | | | C08K |

The present search report has been drawn up for all claims

1

| Place of search | Date of completion of the search | Examiner |
|---|---|---|
| Munich | 4 February 2015 | Eigner, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 14 18 1769

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2015

| Patent document cited in search report | | Publication date | Patent family member(s) | | | Publication date |
|---|---|---|---|---|---|---|
| EP 0666283 | A1 | 09-08-1995 | AT | 220086 | T | 15-07-2002 |
| | | | BE | 1008068 | A3 | 09-01-1996 |
| | | | DE | 69527219 | D1 | 08-08-2002 |
| | | | EP | 0666283 | A1 | 09-08-1995 |
| | | | FI | 950532 | A | 09-08-1995 |
| | | | NO | 950444 | A | 09-08-1995 |
| EP 0805178 | A1 | 05-11-1997 | CA | 2204211 | A1 | 03-11-1997 |
| | | | EP | 0805178 | A1 | 05-11-1997 |
| | | | JP | H1045943 | A | 17-02-1998 |
| | | | NO | 972039 | A | 04-11-1997 |
| | | | TW | 412557 | B | 21-11-2000 |
| | | | US | 5844027 | A | 01-12-1998 |
| WO 0162837 | A2 | 30-08-2001 | AR | 027531 | A1 | 02-04-2003 |
| | | | AU | 3980501 | A | 03-09-2001 |
| | | | BR | 0108551 | A | 11-01-2005 |
| | | | CA | 2399879 | A1 | 30-08-2001 |
| | | | CN | 1425036 | A | 18-06-2003 |
| | | | CO | 5231210 | A1 | 27-12-2002 |
| | | | EP | 1263858 | A2 | 11-12-2002 |
| | | | HU | 0301827 | A2 | 28-08-2003 |
| | | | JP | 2003535155 | A | 25-11-2003 |
| | | | MX | PA02008146 | A | 28-01-2003 |
| | | | PE | 11732001 | A1 | 13-11-2001 |
| | | | PL | 366293 | A1 | 24-01-2005 |
| | | | WO | 0162837 | A2 | 30-08-2001 |
| | | | ZA | 200206364 | A | 19-12-2003 |
| EP 2154190 | A1 | 17-02-2010 | AT | 514743 | T | 15-07-2011 |
| | | | EP | 2154190 | A1 | 17-02-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0805178 A
- EP 2014704 A
- EP 2154190 A